(19)

**Europäisches Patentamt**
**European Patent Office**
**Office européen des brevets**

(11)     **EP 4 210 196 B1**

(12)     **EUROPEAN PATENT SPECIFICATION**

(45) Date of publication and mention
of the grant of the patent:
**19.11.2025  Bulletin 2025/47**

(51) International Patent Classification (IPC):
***H02J 7/00*** (2006.01)

(21) Application number: **22151020.9**

(52) Cooperative Patent Classification (CPC):
**H02J 7/0042; H02J 7/0016;** Y02E 60/10

(22) Date of filing: **11.01.2022**

(54) **BATTERY MANAGEMENT SYSTEM, BATTERY PACK AND METHOD FOR CONTROLLING DISCHARGE OF AT LEAST ONE BATTERY CELL**

BATTERIEVERWALTUNGSSYSTEM, BATTERIEPACK UND VERFAHREN ZUR STEUERUNG DER ENTLADUNG MINDESTENS EINER BATTERIEZELLE

SYSTÈME DE GESTION DE BATTERIE, BLOC-BATTERIE ET PROCÉDÉ DE COMMANDE DE DÉCHARGE D'AU MOINS UNE CELLULE DE BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.07.2023  Bulletin 2023/28**

(73) Proprietor: **Munich Electrification GmbH**
**81373 Munich (DE)**

(72) Inventors:
• **Goede, Stefan**
**80799 München (DE)**

• **Kleppe, Sebastian**
**80637 München (DE)**
• **Prats Valero, Jordi**
**81677 München (DE)**

(74) Representative: **Grünecker Patent- und Rechtsanwälte**
**PartG mbB**
**Leopoldstraße 4**
**80802 München (DE)**

(56) References cited:
**WO-A1-2018/065853**

**Description**

The present disclosure relates to a battery management system, and a battery comprising the battery management system.

With the advanced development of electric vehicles (EV), in particular battery electric vehicles (BEV), and hybrid electric vehicles (HEV), in particular plug-in hybrid electric vehicles (PHEV), high voltage battery packs become more and more common in vehicles like buses, trucks or passenger cars.

Typically, high voltage battery packs used in electric vehicles comprise 80 to 300 battery cells connected in series and are capable of supplying high voltages in a range between 400 V and 1000 V. In future applications, even higher voltages may be supplied by the high voltage battery packs. Such battery packs require a battery management system in order to measure cell voltages, perform cell balancing, and monitor the cell temperature for improving the available capacity of the battery pack and increase the individual longevity of each cell. Throughout this document, the terms "cell" or "battery cell" may refer to either a physical battery cell, or several physical battery cells electrically connected in parallel on a cell level.

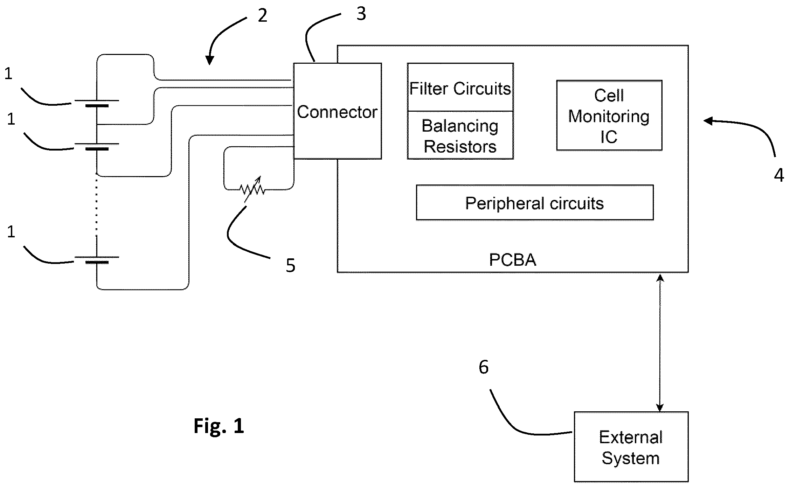

For measuring and balancing a voltage of each of the cells (hereinafter also "cell voltage"), typically, a battery management system comprises specific integrated circuits, so called cell monitoring ICs. Fig. 1 shows an example of a known battery management system. One or more cell monitoring ICs are typically soldered onto a printed circuit board (PCB). Further, filter circuits, which are used to filter the cell voltages for added robustness against electromagnetic interference, and balancing resistors, which are used for discharging specific battery cells in order to balance the voltage between the battery cells, are placed on the PCB. Each of the one or more cell monitoring ICs typically measures between 6 and 25 cells connected in series, although higher numbers are possible. Depending on the used number and types of cell monitoring ICs, certain peripheral circuits, like a power supply (linear transistor, DCDC, or similar), a communication interface (transformer, capacitors, or similar) and/or other capacitors or resistors, become necessary. By soldering all those components on the PCB, the PCB becomes an assembled printed circuit board (PCBA) 4.

In order to connect the PCBA 4 electrically to the battery cells 1 of a battery pack, a connection is established by a harness 2. The harness 2 can, for example, be formed of a wiring harness with discrete wires (as schematically shown in Fig. 1), a PCB, or a flex circuit. The electrical connection of the harness 2 to the cells 1 is oftentimes accomplished by using welding, soldering, wirebond-ing, screwed connection, pressfit, or similar techniques. Oftentimes, a connector 3 is used to electrically connect the harness to the PCBA. Alternatively, the harness 2 may be connected to the PCBA 4 without a connector 3, instead using a screw connection, welding, soldering, or wirebond-ing.

For the purpose of temperature measurement, one or several temperature sensors 5, for example in form of NTC thermistors or PTC thermistors, can be used. The temperature sensors 5 are usually placed inside the battery pack with good thermal coupling to the cells. It is necessary to connect the temperature sensors to the electronics on the PCBA 4, in order to perform analog to digital conversion of the temperature input and communicate the temperatures to an external system 6, usually an electronic control unit of an electric vehicle, in which the battery pack is mounted. The temperature sensors 5 are typically connected to the PCBA 4 using a connector, which may be the same connector 3 or a different connector.

The temperature sensors 5 may be soldered onto the harness 2 directly. Instead of using a connector, temperature sensors of various kinds can be wired directly to the PCBA 4, or connected via welding or soldering. The voltage across the temperature sensor is sampled by the cell monitoring IC along with the cell voltage measurement. It is also possible to mount different cell monitoring ICs on the PCBA 4 for the temperature measurements and the cell voltage measurements, especially if temperatures of a lot of different cells need to be measured. The measured data, including the cell voltages and temperatures of the cells, is communicated digitally from the cell monitoring IC(s) to the external system 6.

However, due to the large dimensions of the PCBA 4, it is a problem that the conventional battery management systems have a high space requirement, and a high weight. Further the conventional battery management systems are relatively costly.

WO 2018/065853 A1 discloses a battery balancing component, which comprises a printed circuit board having several pairs of electrical connection terminals spaced longitudinally along its length for connection to corresponding pairs of positive and negative terminals of a cell in a battery. The PCB has electronic circuitry thereon that includes one sub-circuit for each corresponding pair of electrical terminals. Each sub-circuit has a measuring component for measuring the state of its associated cell and a bypass resistor in electrical communication between the pair of terminals with a switch configured to allow electric current to flow, when the switch is in a conducting state, through the bypass resistor.

Accordingly, there is still a need to provide an improved battery management system with a simplified circuit structure, which allows to save space and weight when integrating the battery management system in a battery pack and to provide a cost-efficient assembly of the battery management system.

At least one of these objectives is solved by the subject matter of the independent claims. Advantageous embodiments of the disclosure are the subject matter of the dependent claims.

Examples, aspects and embodiments presented in the following and not necessarily falling under the scope of the claims are provided in the application to better understand the disclosure.

The present disclosure is based on the idea to provide a battery management system comprising a control circuit, which is configured to monitor a voltage of at least one battery cell; and a connector circuit, which is configured to electrically connect the control circuit to the at least one battery cell. The control circuit is mounted on a first component carrier and comprises a first electronic interface having at least one contact for electrically connecting a mating contact of the connector circuit, and the connector circuit comprises a second electronic interface having at least one mating contact for electrically contacting the at least one contact of the control circuit, at least one terminal for electrically contacting a terminal of the at least one battery cell, and at least one balancing resistor, which is electrically connected between the at least one mating contact and the at least one terminal. The battery management system comprises all the features according to claim 1.

In other words, the present disclosure is based on the idea to place the balancing resistor outside of the first component carrier, on which the control circuit of the battery management system is mounted, and to directly integrate the balancing resistor in the connector circuit, which is separately arranged from the control circuit and electrically connects the control circuit to the at least one battery cell. In this manner, the thermal properties of the control circuit becomes much favorable, since the balancing resistor contribute the largest resistance in the balancing current path, and consequently are the major source for heat generation, when discharging the at least one battery cell. Consequently, the placement of the balancing resistors outside the first component carrier, dispenses with the need to cope with the heat generated from the balancing resistor and it is possible to integrate all components of the control circuit onto a small component carrier, for example a printed circuit board with a form factor of 20*40 mm or less.

Due to the fact that the connector circuit may electrically connect the control circuit to a plurality of battery cells, it is typically a large component. Therefore, there does not arise any cost or special consideration, when the balancing resistor are integrated in the connector circuit, and sufficient spacing between balancing resistors electrically connected to different battery cells can be easily achieved. Accordingly, heat dissipation during balancing of battery cells can be achieved without adding significant area for the connector circuit.

Accordingly, by the specific placement of the balancing resistor of the present disclosure, it is possible to significantly reduce the overall dimensions, weight and cost of the battery management system.

According to an example of the present disclosure, the connector circuit is mounted on a second component carrier, which is arranged separately from the first component carrier. However, it is also possible that the connector circuit is provided in the form of a battery harness and that the balancing resistor is mounted within the harness.

Advantageously, the second component carrier can be a flexible printed circuit board. In this manner, it is possible to arrange the connector circuit and the balancing resistor in a space saving manner within a battery pack, in which the battery management system is used.

Preferably, the at least one balancing resistor may be soldered on the second component carrier. Alternatively or in addition, the at least one balancing resistor may be formed of a metal trace provided on the second component carrier. For this purpose, one or more thin metal traces of specific length and width may be, for example, etched on the second component carrier, or one or more thin metal traces of specific length and width may be deposited on the second component carrier. The one or more thin metal traces may for example made of copper or aluminum, however also other suitable conducting materials are possible.

According to another advantageous example, the first component carrier can be a printed circuit board, in particular a paper printed circuit board. In this manner, it is possible to package the control circuit together on one compact integrated component, which can be integrated with the connector circuit directly. Due to the placement of the at least one balancing resistor outside the printed circuit board, a form factor of the integrated component can be 20*40 mm or even less. Further, a paper printed circuit board may be used for mounting the integrated component, which provides higher sustainability, higher flexibility and lower costs than conventional printed circuit boards.

In order to protect the control circuit from electrostatic discharge and to enhance the robustness properties of the first component carrier, especially for automotive applications, the first component carrier is preferably at least partly overmolded.

In another advantageous example of the present disclosure, the second electronic interface can be a socket, and the first electronic interface can be a pin strip. Alternatively, the second electronic interface can be a Peripheral Component Interconnect (PCI) connector, in particular a Peripheral Component Interconnect Express (PCIE) connector or a miniPCIE connector, and the first component carrier is adapted to fit into the PCI connector and the first electronic interface is formed on the first component carrier, so as to be able to contact the PCI connector.

Hereby, the pin strip may be welded, soldered or glued onto the first component carrier and the socket, PCI connector, PCIE connector or miniPCIE connector may be welded, soldered or glued onto the second component carrier. Additional mechanical fixation means like brackets, clips or screws may be provided for enhancing the fixation between the first electronic interface and the second electronic interface.

In this manner, it is possible to provide a cost efficient solution for integrating the control circuit as an integrated component directly into the connector circuit, wherein the control circuit can be mechanically mounted to the connector circuit with minimal space and weight requirements, since the need for providing a heavy connector can be dispensed. Furthermore, the control circuit is easily detachable and replaceable in case of malfunctions or adaption in the battery cell configuration of the battery pack, in which the battery management system is used.

Alternatively or in addition, the first electronic interface may be welded to the second electronic interface, in order to avoid the necessity for providing a heavy connector between the control circuit and the connector circuit and to integrate the control circuit directly into the connector circuit in a space saving manner.

According to the invention, the control circuit comprises a microcontroller, which is configured to measure the voltage of the at least one battery cell and to control a discharge of the at least one battery cell, a first conductor, which is configured to electrically connect a first controller contact of the microcontroller to the at least one contact for measuring the voltage of the at least one battery cell, and a second conductor, which is configured to electrically connect a second controller contact of the microcontroller to the at least one contact for discharging the at least one battery cell. As the balancing resistor is placed outside the control circuit, the second conductor can be manufactured with a low resistance in the range of several Ohm or milliohm, so that a discharging of the at least one battery cell by means of the second conductor only generates minor heat in the control circuit.

Preferably, the second conductor may have a predefined test resistance, and the microcontroller may be configured to measure a first voltage at a first controller contact and a second voltage at the second controller contact, when discharging the at least one battery cell, and to determine a balancing current flowing through the balancing resistor based on the predefined test resistance and a difference between the measured first voltage and the measured second voltage. In this manner, the battery management system can determine a resistance of the at least one balancing resistor and a required duration for discharging the at least one battery cell directly from the determined balancing current. Accordingly, it is possible to compensate larger tolerances of the at least one balancing resistor being introduced during the manufacturing of the battery management system without introducing insufficiency or malfunctioning of the cell balancing. This is especially useful when providing the at least one balancing resistor as a thin metal trace on the second component carrier of the connector circuit.

In another preferable example of the present disclosure, the control circuit further comprises a communication unit, which is configured to transmit electronic signals between the control circuit and an external system and/or a power supply unit, which is configured to supply power to the controller. Alternatively or in addition, the first conductor may comprise a filter circuit, which is configured to filter a voltage signal of the at least one battery cell, when the microcontroller measures the voltage of the at least one battery cell. Furthermore, as an alternative or in addition the connector circuit can comprise at least one temperature sensor and the control circuit can be electronically connected to the at least one temperature sensor and configured to monitor a temperature of the at least one battery cell by means of the at least one temperature sensor.

In this manner, it is possible to package the control circuit into a compact integrated component, which provides all necessary functionalities of battery cell voltage and temperature measurement and communication to external systems like vehicle ECUs. Hereby, the integrated component can be provided on a small printed circuit board having a form factor of 20*40 mm or lower and may be directly integrated onto the connector circuit by the connection methods described above.

The present disclosure also relates to a battery pack comprising at least on battery cell and the advantageous battery management system according to the present disclosure.

Furthermore, the present disclosure provides a method for controlling discharge of at least one battery cell, which is not claimed herein, wherein the method comprises the steps of:

measuring a first voltage by using a first conductor, which is electrically connected to a first contact of a control circuit, while a balancing switch, which is electrically connected in series with at least one balancing resistor between a first terminal of the at least one battery cell, is closed;
measuring a second voltage by using a second conductor, which is electrically connected to the first contact, while the balancing switch is closed;
determining a balancing current based on a difference between the measured first voltage and the measured second voltage;
determining a resistance of the at least one balancing resistor (124) based on the determined balancing current;
determining a balancing duration based on the determined resistance of the balancing resistor;
discharging the at least one battery cell for the determined balancing duration.

By use of this method, it is possible to determine a resistance of the at least one balancing resistor and a required balancing duration for discharging the at least one battery cell directly from the determined balancing current. Accordingly, it is possible to compensate larger tolerances of the at least one balancing resistor being introduced during the manufacturing of the battery management system without introducing insufficiency or malfunctioning of the cell balancing.

This is especially useful, when providing the at least one balancing resistor as a thin metal trace on the second component carrier of the connector circuit and further allows to save costs, weight and space during manufacturing of the battery management system. Tolerances in the resistance of the at least one balancing resistor can for example be increased from 0.1 % or 5 % accuracy necessary in conventional systems to up to 40% accuracy in the battery management system according to the present disclosure.

In the following, the disclosure is described in more detail with reference to the attached figures and drawings. Similar or corresponding details in the figures are marked with the same reference numerals.

The accompanying drawings are incorporated into the specification and form a part of the specification to illustrate several embodiments of the present disclosure. These drawings, together with the description, serve to explain the principles of the disclosure. The drawings are merely for the purpose of illustrating the preferred and alternative examples of how the disclosure can be made and used, and are not to be construed as limiting the disclosure to only the illustrated and described embodiments. Furthermore, several aspects of the embodiments may form-individually or in different combinations-solutions according to the present disclosure. The following described embodiments can thus be considered either alone or in an arbitrary combination thereof. The described embodiments are merely possible configurations, and it must be borne in mind that the individual features, as described above, can be provided independently of one another, or can be omitted altogether while implementing this disclosure. Further features and advantages will become apparent from the following, more particular description of the various embodiments of the disclosure, as illustrated in the accompanying drawings in which like references refer to like elements, and wherein:

**Fig. 1**     shows a schematic diagram of a battery management system according to the prior art;

**Fig. 2**     shows a schematic diagram of a battery management system according to a first example of the present disclosure;

**Fig. 3**     shows a schematic circuit diagram of the battery management system according to the first example of the present disclosure;

**Fig. 4**     shows a schematic perspective view of a control circuit according to the first example of the present disclosure;

**Fig. 5**     shows a schematic perspective view of a second interface of a connector circuit according to the first example of the present disclosure;

**Fig. 6**     shows a schematic perspective view of a connector circuit according to a second example of the present disclosure;

**Fig. 7**     shows a schematic perspective view of a control circuit according to the second example;

**Fig. 8**     shows a schematic perspective view of a battery management system according to the second example;

**Fig. 9**     shows a schematic circuit diagram of a battery management system according to a third example of the present disclosure;

**Fig.10**    shows a schematic flow chart of a method for controlling discharge of at least one battery cell.

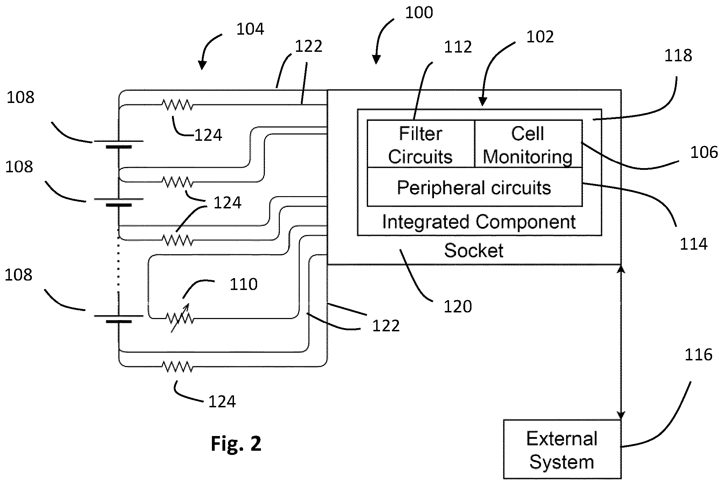

The present disclosure will now be further explained referring to the Figures, and firstly referring to Fig. 2. Fig.2 schematically shows the basic concept of the battery management system 100 according to the present disclosure. The battery management system comprises a control circuit 102 and a connector circuit 104. The control circuit 102 is configured to monitor a voltage of the battery cells 108, to which the control circuit 102 is electrically connected via the connector circuit 104. The battery cells 108 may for example form a battery, which is configured to power the drivetrain of an electric vehicle or hybrid vehicle, or a battery, which is used in a stationary energy storage system.

The control circuit 102 comprises a microcontroller 106, which may be for example provided in form of one or more cell monitoring ICs. Each cell monitoring IC may monitor the voltage of a plurality of battery cells 108, which are connected in series, for example 6 to 25 battery cells in a typical scenario. However, any cell monitoring IC may also monitor the voltage of only one battery cell 108. The monitoring of the voltage of a battery cell 108 thereby comprises at least the measurement of the voltage of the battery cell 108 and may also comprise the control of discharging of the battery cell 108, in order to balance the state of charge of the battery cell 108 with the state of charge of another battery cell 108, to which the battery cell 108 is electrically connected. Optionally, the monitoring of the voltage of the battery cell 108 may also comprise the measurement of a temperature of the battery cell 108 by means of a temperature sensor 110, which is assembled in proximity to the battery cell 108. Hereby, it is possible that temperature measurement of the battery cells 108 may be conducted by the same cell monitoring ICs or may be conducted by a separate cell monitoring IC, specifically adapted for temperature measurements, being also a part of the microcontroller 106.

Further, the microcontroller 106 may optionally include a central processing unit (CPU) or a memory, for example a nonvolatile memory such as a flash memory or an EEPROM. The memory may store various programs, which can be executed by the CPU for managing the battery cells 108 or the assembled battery including the battery cells 108. However, it is also possible that the microcontroller 106 only comprises one or more cell monitoring ICs, which may receive instructions from an external system 116, like an electronic control unit of a vehicle.

In addition to the microcontroller 106, the control circuit 102 may further comprise a filter circuit 112, for filtering a voltage signal of the battery cells 108, when measuring the cell voltage. The control circuit 102 may further comprise several peripheral circuits 114, like a communication unit, which enables communication between the control circuit 102 and the external system 116. The peripheral circuits 114 may further comprise a power supply unit, which supplies power to the microcontroller 106, however, it is also possible that the microcontroller 106 is directly supplied from the battery comprising the battery cells 108.

As schematically shown in Fig. 2, the microcontroller 106, the filter circuits 112 and the peripheral circuits 114 are mounted on a first component carrier 118, to form the control circuit 102 as an integrated component. Hereby the term integrated component especially refers to the fact, that all components necessary for measuring the battery cell voltage and the battery cell temperature, optionally with the components necessary for communication to the external system 116, are packaged together as a single compact component. The possible processes and methods for forming the control circuit 102 as an integrated component will be described later. As exemplified in Fig. 2, the connector circuit 104 may comprise a socket 120 for receiving a first electronic interface of the control circuit, in order to electrically connect the control circuit 102 to the connector circuit 104.

The connector circuit 104 is configured to electrically connect the control circuit 102 to the battery cells 108. For this purpose, the connector circuit 104 comprises a second electronic interface (not shown in Fig. 2), which is adapted to mate with the first electronic interface of the control circuit 102, so as to electrically connect the control circuit 102 and the connector circuit 104. A plurality of conductors 122, which may be for example wires or cables of a harness or wires or metal traces formed on a printed circuit board, electrically connects the second electronic interface to terminals of the connector circuit 104, which can be used for electrically contacting terminals of the battery cells 108.

According to the present disclosure, balancing resistors 124 are integrated into the connector circuit 104 and are electrically connected by the conductors 122 between a contact of the second electronic interface and the terminals of the battery cells 108. As shown in the example of Fig. 2, each terminal of the battery cells 108 may be electronically connected to the second electronic interface by a conductor 122 comprising a balancing resistor 124 and by another conductor 122 not comprising a balancing resistor 124, which may be used for more accurately measuring the battery cell voltage. However, it is also possible that each terminal of the battery cells 108 is electronically connected to the second electronic interface by only one conductor 122 comprising a balancing resistor 124 or by more than one balancing resistor 124.

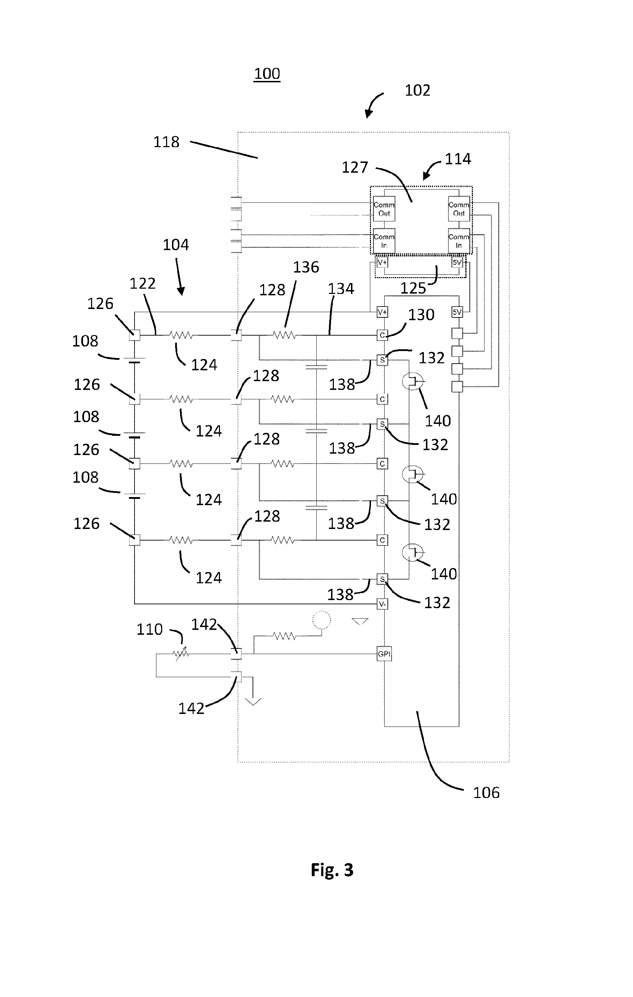

Fig. 3 shows a schematic circuit diagram of the battery management system 100. In this example, the microcontroller 106 is configured to monitor the voltage of three battery cells 108 connected in series, and a balancing resistor 124 is electrically connected between each terminal 126 of the connector circuit 104, which is connectable to a terminal of a battery cell 108 and the second electronic interface of the connector circuit, so that there are four balancing resistors 124 are arranged in the connector circuit 104. In the connector circuit 104, only the conductor 122, which comprises the balancing resistor 124 is shown, but there may be more than one conductor 122 electrically connected between each terminal 126 and the second electronic interface.

The control circuit 102 comprises the microcontroller 106 and the peripheral circuits 114, which include a power supply unit 125, for example including a linear transistor, a DCDC converter, or similar suitable electronics, which supply a voltage signal (e.g. 3.3 V or 5V) to the microcontroller 106. For this purpose, the power supply unit may be electrically connected to the battery cells 108 by a separate contact (not shown in Fig. 3), which may be part of the first electronic interface or separately arranged, for being supplied by the voltage of the battery, which are formed by the battery cells 108.

The peripheral circuits 114 may further comprise a communication unit 127, for example including a transformer, or a capacitor, or similar suitable electronics. The peripheral circuits 114 may provide galvanic isolation for the digital communication signals being transmitted between the microcontroller 106 and the external system, to which the microcontroller 106 is connected.

As shown in Fig. 3, the electronic interface of the control circuit 102 comprises contacts 128, which are connectable to a mating contact of the second electronic interface (not shown in Fig.3) for electronically connecting the microcontroller 106 to each battery cell 108, which is to be monitored. Two controller contacts of the microcontroller, namely a first controller contact 130 ("c-pin") and a second controller contact 132 ("s-pin") are electrically connected to each contact 128 of the electronic interface.

Each c-pin 130 is electrically connected via a first conductor 134, which may include a filter resistor 136, to the contact 128. The first conductors 134, which are electrically connected via the connector circuit 104 to different terminals of the same battery cell 108 may further be connected via filter capacitors to each other. By use of one or more analog to digital converter ("ADC-converter"), electrically connected between two c-pins 130, respectively, the microcontroller can measure voltages of each battery cell 108 between each two c-pins.

On the other hand, each s-pin 132 is electrically connected to the contact 128 via a second conductor 138. The s-pins 132 of the microcontroller, which are electrically connected via the second conductor 138 and the connector circuit 104 to different terminals of the same battery cell 108, are electrically connected to each other by a balancing switch 140 of the microcontroller 106. The balancing switch 140 can for example be a MOSFET or another semiconductor switch.

By controlling opening and closing of the balancing switches 140, it is possible for the microcontroller 106 to control discharging of the respective battery cell 108 through the balancing resistor 124, which is connected in series with the balancing switch 140. Since the balancing resistor is arranged outside the control circuit 102, it is possible to lower the resistance of the second conductor 138, to be in a range of several Ohm, for example below 5 Ohm, or more preferably to be in a range below 0.5 Ohm, for example equal to or below 0.1 Ohm. In particular, the resistance of the second conductor 138 can be made smaller compared to the resistance of the first conductor 134, which comprises the filter resistor 136, having usually a resistance of 100 Ohm to 1 kOhm.

For this reason, the second conductors 138 generate a minor amount of heat, when discharging one of the battery cells 108 through the balancing resistor 124. Accordingly, the thermal properties of the control circuit 102 and the first component carrier 118, onto which the control circuit 102 is mounted, become favorable and it is possible, to integrate all components of the control circuit 102 onto a small component carrier 118, for example with a form factor of 20*40 mm or less.

The first electronic interface of the control circuit 102 may further include contacts 142, which allow to electrically connect the microcontroller 106 to one or more temperature sensors 110 arranged in the connector circuit 104. In this manner, the temperature of one or more of the battery cells 108 can also be measured by the microcontroller 106.

The connector circuit 104 may preferably be mounted to a second component carrier (not shown in Fig. 3), which is arranged separately from the first component carrier 118. Preferably, the second component carrier may be a flexible printed circuit board, also signified as a flex circuit. Such flexible circuit board may be formed of flexible plastic substrates, usually polyimide, polyether ether ketone (PEEK) or a transparent conductive polyester. The conductors 122 of the connector circuit 104 may in this case be structured onto the substrate by a photolithography technique or may be formed of metal strips (preferably copper or a copper alloy) with a thickness below 0.1 mm being laminated between the plastic substrate.

A balancing resistor 124 is connected between each terminal 126 and a mating contact of the second electronic interface of the connector circuit 104. The resistance of each balancing resistor 124 may typically lie in the range of 1 Ohm to 100 Ohm, preferably in the range from 20 Ohm to 50 Ohm. However, also higher resistances than 100 Ohm are possible. Since the connector circuit 104 electrically connects the control circuit 102 to each of the battery cells 108, the flexible printed circuit boards, onto which the connector circuit 104 is preferably mounted, is a large component, so that the balancing resistors 124 can be distributed with sufficient spacing on the flexible printed circuit board. Accordingly, heat dissipation of heat generated when discharging at least one of the battery cells 108 through one or more of the balancing resistors 124 can be achieved without enlarging the area of the flexible printed circuit board.

The balancing resistors 124 may for example be soldered or welded onto the flexible printed circuit board, onto which the connector circuit 104 is mounted. Alternatively, the balancing resistors 124 can be manufactured by etching long thin traces in the conductors, which connect each terminal 126 to a respective mating contact of the second electronic interface, or by depositing long thin metal traces, for example made of aluminum, copper or another metal with suitable conductivity, onto the flexible printed circuit board and electrically connect them between each terminal 126 and a respective mating contact of the second electronic interface.

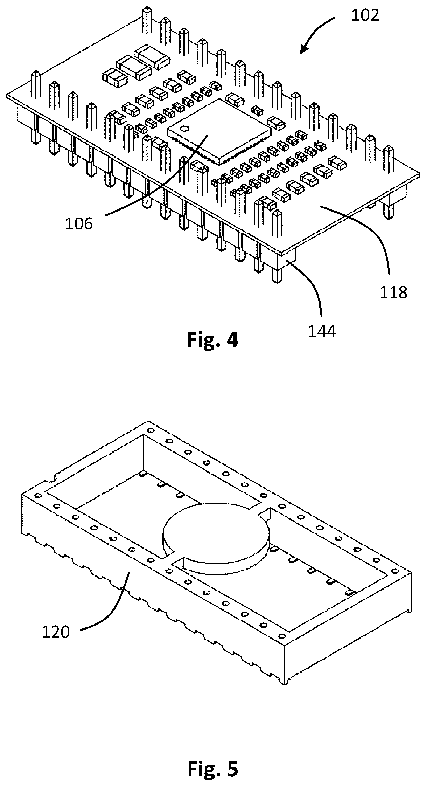

Fig. 4 shows an example of packaging the control circuit 102 as an integrated component. The microcontroller 106 is mounted together with the filter circuits 112 and the optional peripheral circuits 114 to a printed circuit board (PCB) as the first component carrier 118. In order to achieve a sustainable, highly flexible and cost-efficient solution, a paper printed circuit board can optionally be used as the first component carrier 118.

For mounting the control circuit 102, the electronic components of the control circuit 102 can for example be welded or soldered to a printed circuit board as the first component carrier 118 or mounted by other suitable methods. A pin strip 144 is soldered to the bottom side of the PCB 118 and serves as the first electronic interface, so that the contacts 128 (and 142) of the first electronic interface are provided in form of pins. As shown in Fig. 4, the pin strip 144 may be soldered at both elongated edges of the PCB 118, however also other arrangements of the pin strip 144 are possible. Fig. 5 shows an exemplary socket 120, suitable for receiving the pin strip 144. The socket 120 may be for example welded, soldered or glued to the flex circuit, on which the connector circuit 104 is mounted, so as to serve as the second electronic interface of the connector circuit 104. Accordingly, in this example the mating contacts of the second electronic interface are provided in the form of receptacles of the socket 120.

By forming the first and the second electronic interface in this manner, it is possible to press the assembled control circuit 102 in the socket 120 and to establish electrical connection between the control circuit 102 and the connector circuit 104 through the pin strip 144 and the socket 120. Consequently, it is not necessary to provide a costly and heavy automotive connector for establishing such connection, so that the weight and cost of the battery management system 100 can be significantly reduced. To further enhance the stability of the electrical connection between the control circuit 102 and the connector circuit 104, mechanical fixation means like brackets, clips or screws may be provided with any of the pin strip 144 or socket 120, or both.

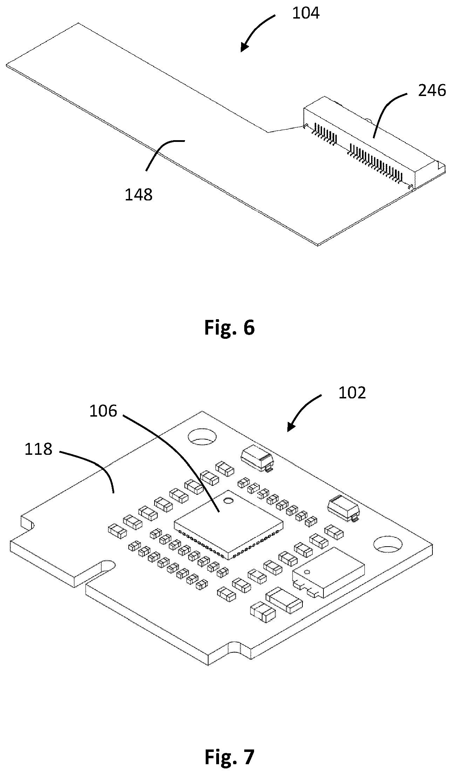

A second example for packaging the control circuit 102 as an integrated component and efficiently connecting it to the connector circuit 104 is shown in Figs. 6 to 8. Fig. 6 shows a miniPCIE connector 246, which is fixed to the flex circuit 148, onto which the connector circuit 104 is mounted, to serve as the second electronic interface of the connector circuit 104. The miniPCIE connector 246 may be for example fixed to the flex circuit 148 by soldering, welding or gluing.

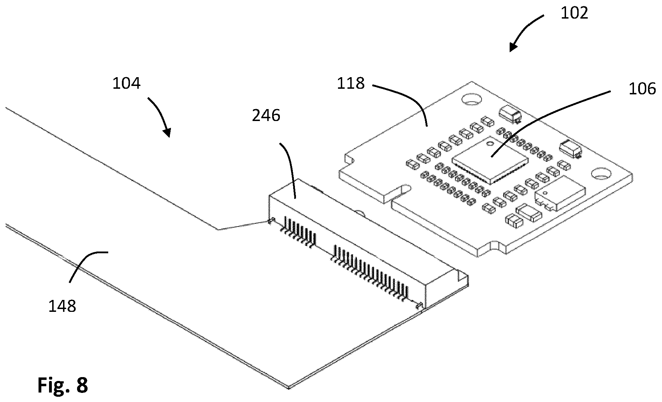

Fig.7 shows the control circuit 102 including the microcontroller 106 being mounted, for example by welding or soldering, on a PCB (or a paper PCB) as the first component carrier 118. In the second example, the PCB 118 is formed to have a shape to fit into the miniPCIE connector 246 shown in Fig. 6. Contacts 128 (and 142) for connecting the mating contacts of the miniPCIE connector 246 are formed on the PCB 118 directly. In this manner, the need for a costly and heavy connector on the PCB 118 can be dispensed and the control circuit 102 being mounted on the PCB 118 can be inserted into the miniPCIE connector 246 directly, as shown in Fig. 8. Furthermore, the control circuit 102 is easily retractable and removable from the battery management system 100 and can be easily replaced in case of a malfunction or any modifications in the battery cell configuration. Also in this example, the miniPCIE connector 246, the PCB 118 or both may be provided with mechanical fixation means like brackets, clips or screws in order to enhance the fixation between the miniPCIE connector 246 and the PCB 118.

As an alternative in the second example, instead of the miniPCIE connector 246 any other type of PCIE connector or PCI connector may be mounted to the flex circuit 148 or any other type of second component carrier, which may be used. The PCB 118 or any other first component carrier 118, which may be used, to carry the control circuit 102, may then be formed so as to fit in and electrically connect to the type of PCIE connector or PCI connector mounted to the second component carrier.

In addition to the above described mounting methods, the first component carrier 118 may optionally be at least partly overmolded, in order to enhance the stability of the control circuit 102 and to protect the electronic components of the control circuit 102 from electro-static-discharging.

In this respect, it is also possible that the electric components are wire-bonded directly and overmolded after wire-bonding without the use of a PCB as the first component carrier 118. In this example, the overmolded control circuit 102 can be provided with weld tabs as the contacts 128 of the first electronic interface and can be welded directly onto the flex circuit, on which the connector circuit 104 is mounted, for establishing electrical connection between the wire-bonded control circuit 102 and the connector circuit 104. Since in this example the control circuit 102 can be directly integrated into the flex circuit, on which the connector circuit 104 is mounted, a space-saving solution is achieved.

Notably, the described methods and examples for packaging the control circuit 102 into an integrated component are not only suitable for an control circuit 102, in which the balancing resistors 124 are removed and placed in the connector circuit 104, but may be also applied for a control circuit 102 including the balancing resistors 124, as long as a sufficient heat management of the control circuit 102 can be achieved during discharging of the battery cells 108 through at least one of the balancing resistors 124.

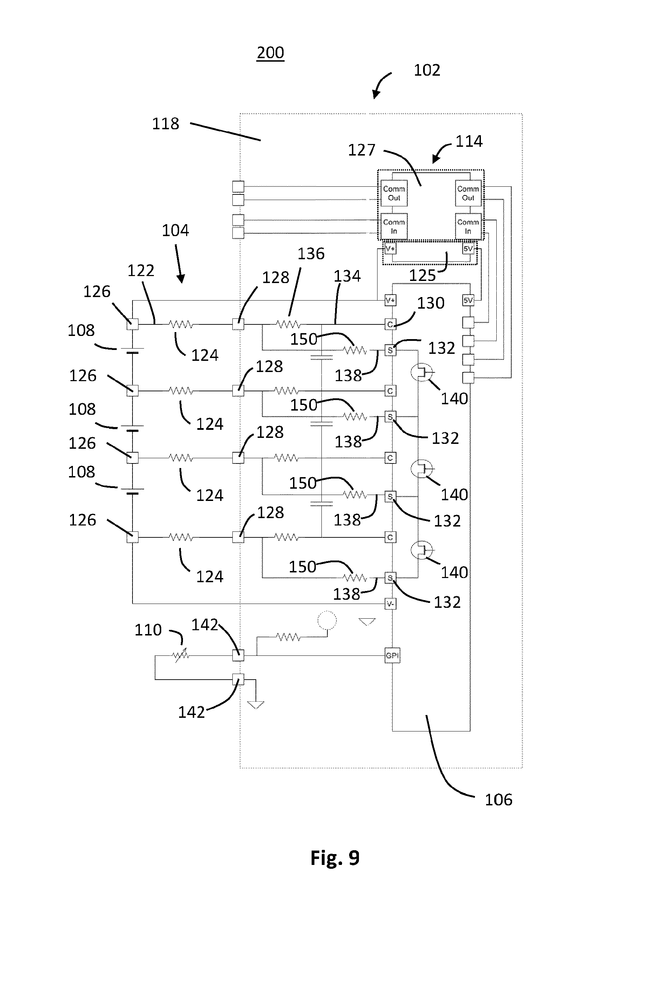

Fig. 9 shows a schematic circuit diagram of a second exemplary battery management system 200. The battery management system 200 corresponds in large parts to the battery management system 100 shown in Fig. 3. However, the battery management system 200 further includes at least one test resistor 150 as a part of the second conductor 138. The test resistor 150 is electrically connected between each s-pin 132 and each respective contact 128, to which the s-pin 132 is electronically connected, in order to allow discharging of one of the battery cells 108. The know resistance of the test resistors 150 enables the battery management system 200 to determine a resistance of the balancing resistors 124, when discharging the electrically connected battery cells 108. In order to avoid extensive heat generation in the control circuit 102 during discharging of one of the battery cells, the resistance of the test resistors may be chosen to be equal to or smaller than 2 Ohm, more preferably to be equal to or smaller than 0.5 Ohm, and even more preferably to be equal to or smaller than 0.1 Ohm.

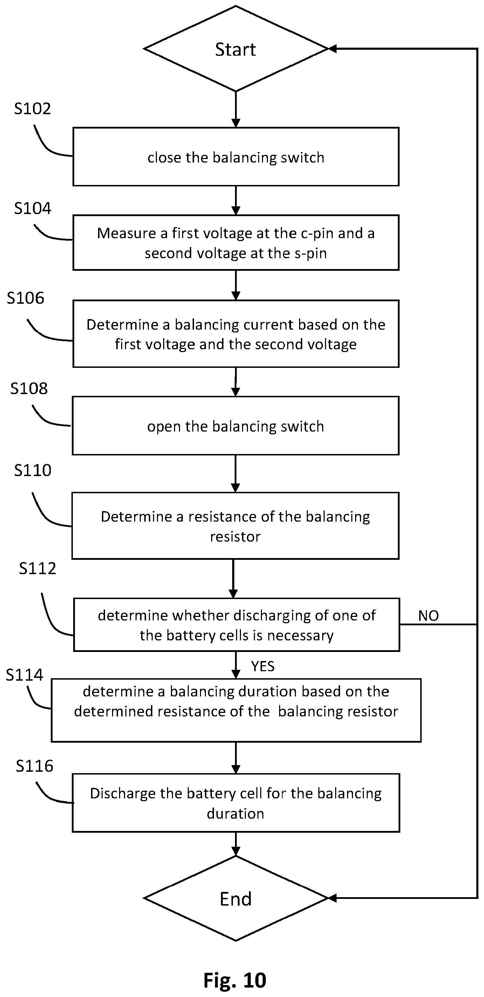

Fig. 10 shows a schematic flow chart of a method performed in battery management system 200 for controlling discharging of at least one battery cell 108, which includes a method for determining a balancing resistance of the balancing resistor 124, which is connected in series to the at least one battery cell 108 (in the following signified as "battery cell 108 to be balanced").

For determining the balancing resistance, the microcontroller 106 closes the balancing switch 140 being connected in series with the battery cell 108 to be balanced (step S102). After closing the balancing switch 140, the microcontroller 106 measures a first voltage at the c-pins 130, which are electrically connected to the terminals of the battery cell 108 to be balanced. Further, the microcontroller 106 measures a second voltage at the s-pins 132, which are connected to the terminals of the battery cell 108 to be balanced (step S104), by means of a voltage measurement device, for example an ADC, which is provided between the s-pins 132 for allowing redundant voltage measurements of the battery cell voltage at the c-pins 130 and the s-pins 132.

Since the test resistor 150 is electrically connected in series to the balancing resistor 124 between the s-pin 132 and the contact 128, the first voltage and the second voltage differ by a voltage, which drops across the test resistor. Accordingly, the microcontroller 106 can determine the balancing current flowing through the test resistor 150 and the balancing resistor 124, by determining the balancing current

$$I_{balance} = \frac{(\text{first voltage} - \text{second voltage})}{2 * R\_test} \qquad (1)$$

where R_test is the resistance of the test resistor 150 (step S106). The factor 2 in the denominator of equation (1) results from the fact, that a test resistor 150 is connected in series with each of the s-pins 132, so that in total two test resistors 150 are connected in series to the battery cells 108. However, this factor may differ, if another number n of test resistors 150 is connected in series with the battery cells 108. After determining the balancing current, the balancing switch 140 is opened again (step S108). Of course, step S108 may also be performed before determining the balancing current in step S106. Since the determination of the balancing current can be completed in a short time, usually between 1 and 100 ms, the closing of the balancing switch solely for the determination of the balancing current discharges the corresponding battery cell 108 to be balanced only to a minor extent.

Based on the determined balancing current $I_{balance}$, the microcontroller 106 determines the resistance $R_{balance}$ of the balancing resistor 124. For this purpose, the microcontroller 106 determines a third voltage (corresponding to the cell voltage $V_{cell}$ of the battery cell 108 to be balanced) at the c-pins 130, which are electrically connected to the terminals of the battery cell 108 to be balanced, while the balancing switch 140 is open. On the basis of the determined balancing current $I_{balance}$ and the voltage difference between the third voltage and the first voltage, the microcontroller 106 determines (step S110) the resistance $R_{balance}$ of the balancing resistor 124 as

$$R_{balance} = \frac{(\text{third voltage} - \text{first voltage})}{I_{balance}} \qquad (2)$$

In a next step (S112), the microcontroller 106 determines, whether balancing of the voltages of the battery cell 108 to be balanced is necessary, i.e. whether the voltage of the battery cell 108 to be balanced exceeds the voltage of at least one of the other battery cells 108 for a predetermined amount. In the following, it is assumed for simplicity that cell balancing is performed for only the battery cell 108 to be balanced, however cell balancing may also be performed for more than one of the battery cells 108 at the same time. If cell balancing is not required (NO in step S112), the method may either end or return to the start again and the resistance of the balancing resistor 124 may be determined again, for example, after a predetermined time has elapsed.

If cell balancing is required (YES in step S112), the microcontroller 106 starts to control discharging of the battery cell 108 to be balanced. The process of cell balancing may for example be started at the end of charging the battery pack, when the battery cells 108 are about to reach a full state of charge (100 % SOC), or may be started at the end of discharging the battery pack, when the battery cells 108 are about to reach a minimum state of charge.

The microcontroller 106 first determines (step S114) a balancing duration based on the determined resistance $R_{balance}$ of the balancing resistor 124 and other parameters, such as cell state of charge, or a cell state of health of the battery cell 108 to be balanced. Various different balancing techniques are known which can be used to determine the balancing duration on the basis of a known balancing resistance. The microcontroller 106 then closes the balancing switch 140 and controls discharging of the battery cell 108 to be balanced until the determined balancing duration has elapsed since the start of discharging (step S116). Once a time corresponding to the balancing duration has been elapsed since the start of discharging, the microcontroller 106 determines that cell balancing is completed and opens the balancing switch 140 in order to stop discharging of the battery cell 108 to be balanced.

By implementing the method for determining the resistance of the balancing resistors 124 shown in Fig. 10 before cell balancing is performed, it is possible to determine the required balancing duration more accurately. Accordingly, it is possible to take into account tolerances of the resistance of the balancing resistors 124. In particular, with the disclosed method, it is possible to compensate of tolerances of the resistances of the balancing resistors 124 of up to 40%, which is remarkably larger than in conventional systems, where usually only tolerances in the range of 0.1 % to 5 % can be compensated. This is especially interesting for the fabrication of the balancing resistors 124 as thin metal traces on the second component carrier (e.g. the flex circuit 148), on which the connector circuit 104 is mounted, since the fabrication of the thin metal traces is subject to larger tolerance variations.

Notably, the resistance of the balancing resistor 124 may be determined regardless of whether discharging of one of the at least one battery cells 108 is necessary or may be determined as a part of the cell balancing process, before discharging any of the battery cells 108. After the resistance of the balancing resistor 124 has been determined in step S110, the microcontroller 106 or the external system 116 may save the determined resistance of the balancing resistor 124, for example in a non-volatile memory.

As an alternative to arrange the test resistor 150 on the second conductor 138, it is also possible to implement a predetermined test current sink in parallel to the second conductor 138, and to measure the first voltage at the s-pins 132, when the test current sink is OFF, and to measure the second voltage at the s-pins 132, when the test current sink is ON. Determination of the balancing current and balancing resistance can then be done by the difference between the first voltage and the second voltage. Further, as an alternative to implementing the method for determining the balancing resistance of at least one of the balancing resistors 124 in the microcontroller 106, the method may be executed for example by a vehicle electronic control unit, which is supervising the microcontroller 106.

REFERENCE NUMERALS

| 100, 200 | battery management system |
| --- | --- |
| 102 | control circuit |
| 104 | connector circuit |
| 106 | microcontroller |
| 108 | battery cell |
| 110 | temperature sensor |
| 112 | filter circuit |
| 114 | peripheral circuits |
| 116 | external system |
| 118 | first component carrier |
| 120 | socket |
| 122 | conductors |
| 124 | balancing resistor |
| 125 | Power supply unit |
| 126 | terminal |
| 127 | communication unit |
| 128, 142 | contacts of the first electronic interface |
| 130 | first controller contact (c-pin) |
| 132 | second controller contact (s-pin) |
| 134 | first conductor |
| 136 | filter resistor |
| 138 | second conductor |
| 140 | balancing switch |
| 144 | pin strip |
| 148 | flex circuit |
| 150 | test resistor |
| 246 | miniPCIE connector |

Claims

1.   A battery management system (100) comprising:

a control circuit (102), which is configured to monitor a voltage of a plurality of battery cells (108); and
a connector circuit (104), which is configured to electrically connect the control circuit (102) to the plurality of battery cells (108);
wherein the control circuit (102) is mounted on a first component carrier (118) of the battery management system and
comprises

a microcontroller (106), which comprises cell monitoring circuitry configured to measure the voltages of the plurality of battery cells (108) and to control a discharge of the plurality of battery cells (108); and
a first electronic interface having contacts (128) for electrically connecting mating contacts of the connector circuit (104);

wherein the connector circuit (104) comprises

a second electronic interface having mating contacts for electrically contacting the contacts (128) of the control circuit;
terminals (126) for electrically contacting terminals of the plurality of battery cells (108); and
balancing resistors (124), which respectively are electrically connected between the mating contacts and the terminals (126);

wherein the cell monitoring circuitry comprises analog to digital converters for measuring the voltages of the plurality of battery cells (108), and balancing switches (140) for discharging the plurality of battery cells (108), wherein each analog to digital converter is respectively electrically connected between two first controller contacts (130) of the microcontroller (106) and wherein each balancing switch (140) is respectively electrically connected between two second controller contacts (132) of the microcontroller (106); and
wherein the control circuit (102) further comprises:

a plurality of first conductors (134), which respectively electrically connect one
among the first controller contacts (130) of the microcontroller (106) to a corresponding one of the contacts (128) of the first electronic interface, so as to enable the microcontroller (106) to respectively measure the voltage of each battery cell (108) between each two first controller contacts (130); and
a plurality of second conductors (138), which respectively electrically connect one
among the second controller contacts (132) of the microcontroller to a corresponding one of the contacts (128) of the first electronic interface for electrically connecting the
balancing switches (140) respectively to the plurality of battery cells (108), so as to enable the microcontroller (106) to respectively control discharging of the plurality of battery cells (108) through the balancing resistors (124) by controlling opening and closing of the balancing switches (140);
wherein respectively one of first controller contacts (130) and one of the second controller contacts (132) are electrically connected to a same one contact (128) of the first electronic interface.

2. The battery management system (100) according to claim 1, wherein the connector circuit (104) is mounted on a second component carrier, which is arranged separately from the first component carrier.

3. The battery management system (100) according to claim 2, wherein the second component carrier is a flexible printed circuit board (148).

4. The battery management system (100) according to one of claims 2 or 3, wherein the balancing resistors (124) are soldered on the second component carrier.

5. The battery management system according to one of claims 2 to 4, wherein the balancing resistors (124) are formed of metal traces provided on the second component carrier.

6. The battery management system (100) according to one of claims 1 to 5, wherein the first component carrier (118) is a printed circuit board, in particular a paper printed circuit board.

7. The battery management system (100) according to one of claims 1 to 6, wherein the first component carrier (118) is at least partly overmolded.

8. The battery management system (100) according to one of claims 1 to 7, wherein the second electronic interface is a socket (120) and the first electronic interface is a pin strip (144); or
wherein the second electronic interface is a Peripheral Component Interconnect, PCI connector, in particular a Peripheral Component Interconnect Express, PCIE, connector or a miniPCIE connector (246), and the first component carrier (118) is adapted to fit into the PCI connector and the first electronic interface is formed on the first component carrier (118), so as to be able to contact the PCI connector.

9. The battery management system (100) according to one of claims 1 to 7, wherein the first electronic interface is welded to the second electronic interface.

10. The battery management system (200) according to one of claims 1 to 9,

   wherein the plurality of second conductors (138) respectively have a predefined test resistance (150), and wherein the microcontroller (106) is configured to measure a first voltage at the first controller contact (130), being electrically connected in series with a battery cell to be balanced, and a second voltage at the second controller contacts (132), being electrically connected in series with a battery cell to be balanced, when discharging the battery cell (108) to be balanced, and to determine a balancing current flowing through the balancing resistor (124) based on the resistance of the test resistor (150) and a difference between the measured first voltage and the measured second voltage.

11. The battery management system (100, 200) according to one of claims 1 to 10 wherein the control circuit (102) further comprises

   a communication unit (127), which is configured to transmit electronic signals between the control circuit (102) and an external system (116) and/or.
   a power supply unit (125), which is configured to supply power to the microcontroller (106) and/or
   wherein the plurality of first conductors respectively comprise a filter circuit (112), which is configured to filter a voltage signal of the plurality of battery cells (108), when the microcontroller (106) measures the voltage of the plurality of battery cells (108).

12. The battery management system according to one of claims 1 to 11, wherein the connector circuit (104) comprises at least one temperature sensor (110) and
wherein the control circuit (102) is electronically connected to the at least one temperature sensor (110) and configured to monitor a temperature of the plurality of battery cells (108) by means of the at least one temperature sensor (110).

13. A battery pack comprising a plurality of battery cells (108) and the battery management system (100, 200) according to one of claims 1 to 12.

**Patentansprüche**

1. Ein Batteriemanagementsystem (100), umfassend:

   eine Steuerungsschaltung (102), die so ausgestaltet ist, um eine Spannung einer Vielzahl von Batteriezellen (108) zu überwachen; und
   eine Verbindungsschaltung (104), die so ausgestaltet ist, um die Steuerungsschaltung (102) elektrisch mit der Vielzahl von Batteriezellen (108) zu verbinden;
   wobei die Steuerungsschaltung (102) auf einem ersten Bauteil-Träger (118) des Batteriemanagementsystems angebracht ist und umfasst

      einen Mikrocontroller (106), der eine Zellenüberwachungsschaltung umfasst, die so ausgestaltet ist, um die Spannungen der Vielzahl der Batteriezellen (108) zu messen und eine Entladung der Vielzahl der Batteriezellen (108) zu steuern; und
      eine erste elektronische Schnittstelle mit Kontakten (128) zum elektrischen Verbinden von Gegenkontakten der Verbindungschaltung (104);

   wobei die Verbindungsschaltung (104) umfasst

eine zweite elektronische Schnittstelle mit Gegenkontakten zum elektrischen Kontaktieren der Kontakte (128) der Steuerungsschaltung;

Anschlussklemmen (126) zum elektrischen Kontaktieren von Anschlussklemmen der Vielzahl der Batteriezellen (108); und

Ausgleichswiderstände (124), die jeweils elektrisch zwischen den Gegenkontakten und den Anschlussklemmen (126) verbunden sind;

wobei die Zellenüberwachungsschaltung Analog-Digital-Wandler zum Messen der Spannungen der Vielzahl der Batteriezellen (108) umfasst, und Ausgleichsschalter (140) zum Entladen der Vielzahl der Batteriezellen (108), wobei jeder Analog-Digital-Wandler jeweils elektrisch zwischen zwei ersten Steuerkontakten (130) des Mikrocontrollers (106) verbunden ist und wobei jeder Ausgleichsschalter (140) jeweils elektrisch zwischen zwei zweiten Steuerkontakten (132) des Mikrocontrollers (106) verbunden ist; und

wobei die Steuerungsschaltung (102) weiterhin umfasst:

eine Vielzahl von ersten Leitern (134), die jeweils einen der ersten Steuerkontakte (130) des Mikrocontrollers (106) mit einem entsprechenden der Kontakte (128) der ersten elektronischen Schnittstelle elektrisch verbinden, um es dem Mikrocontroller (106) zu ermöglichen, jeweils die Spannung jeder Batteriezelle (108) zwischen jeweils zwei ersten Steuerkontakten (130) zu messen; und

eine Vielzahl von zweiten Leitern (138), die jeweils einen der zweiten Steuerkontakte (132) des Mikrocontrollers elektrisch mit einem entsprechenden der Kontakte (128) der ersten elektronischen Schnittstelle verbinden, um die Ausgleichsschalter (140) jeweils elektrisch mit der Vielzahl von Batteriezellen (108) zu verbinden, um es dem Mikrocontroller (106) zu ermöglichen, das jeweilige Entladen der Vielzahl der Batteriezellen (108) über die Ausgleichswiderstände (124) durch Steuern des Öffnens und Schließens der Ausgleichsschalter (140) zu steuern;

wobei jeweils einer der ersten Steuerkontakte (130) und einer der zweiten Steuerkontakte (132) elektrisch mit demselben Kontakt (128) der ersten elektronischen Schnittstelle verbunden sind.

2. Das Batteriemanagementsystem (100) nach Anspruch 1, wobei die Verbindungschaltung (104) auf einem zweiten Bauteil-Träger angebracht ist, der getrennt von dem ersten Bauteil-Träger angeordnet ist.

3. Das Batteriemanagementsystem (100) nach Anspruch 2, wobei der zweite Bauteil-Träger eine flexible Leiterplatte (148) ist.

4. Das Batteriemanagementsystem (100) nach einem der Ansprüche 2 oder 3, wobei die Ausgleichswiderstände (124) auf den zweiten Bauteil-Träger gelötet sind.

5. Das Batteriemanagementsystem nach einem der Ansprüche 2 bis 4, wobei die Ausgleichswiderstände (124) aus auf dem zweiten Bauteil-Träger vorgesehenen Metallbahnen gebildet sind.

6. Das Batteriemanagementsystem (100) nach einem der Ansprüche 1 bis 5, wobei der erste Bauteil-Träger (118) eine Leiterplatte, insbesondere eine papier-basierte Leiterplatte, ist.

7. Das Batteriemanagementsystem (100) nach einem der Ansprüche 1 bis 6, wobei der erste Bauteil-Träger (118) zumindest teilweise umspritzt ist.

8. Das Batteriemanagementsystem (100) nach einem der Ansprüche 1 bis 7, wobei die zweite elektronische Schnittstelle eine Buchse (120) und die erste elektronische Schnittstelle eine Stiftleiste (144) ist; oder

wobei die zweite elektronische Schnittstelle ein Peripheral Component Interconnect-, PCI, Stecker, insbesondere ein Peripheral Component Interconnect Express (PCIE)-Stecker oder ein miniPCIE-Stecker (246) ist und der erste Bauteil-Träger (118) so ausgelegt ist, dass er in den PCI-Stecker passt, und die erste elektronische Schnittstelle auf dem ersten Bauteil-Träger (118) ausgebildet ist, um mit dem PCI-Stecker in Kontakt treten zu können.

9. Das Batteriemanagementsystem (100) nach einem der Ansprüche 1 bis 7, wobei die erste elektronische Schnittstelle an der zweiten elektronischen Schnittstelle angeschweißt ist.

10. Das Batteriemanagementsystem (200) nach einem der Ansprüche 1 bis 9,

wobei die Vielzahl der zweiten Leiter (138) jeweils einen vordefinierten Testwiderstand (150) aufweisen, und

wobei der Mikrocontroller (106) so ausgestaltet ist, um eine erste Spannung am ersten Steuerkontakt (130) zu messen, der elektrisch in Reihe mit einer auszugleichenden Batteriezelle verbunden ist und eine zweite Spannung an den zweiten Steuerkontakten (132), die elektrisch in Reihe mit einer auszugleichenden Batteriezelle verbunden sind, beim Entladen der auszugleichenden Batteriezelle (108) zu messen, und einen durch den Ausgleichswiderstand (124) fließenden Ausgleichsstrom auf der Grundlage des Widerstands des Testwiderstands (150) und einer Differenz zwischen der gemessenen ersten Spannung und der gemessenen zweiten Spannung zu bestimmen.

11. Das Batteriemanagementsystem (100, 200) nach einem der Ansprüche 1 bis 10, wobei die Steuerungsschaltung (102) weiterhin umfasst

eine Kommunikationseinheit (127), die so ausgestaltet ist, dass sie elektronische Signale zwischen der Steuerungsschaltung (102) und einem externen System (116) überträgt und/oder
eine Stromversorgungseinheit (125), die so ausgestaltet ist, dass sie den Mikrocontroller (106) mit Strom versorgt, und/oder
wobei die Vielzahl der ersten Leiter jeweils eine Filterschaltung (112) umfasst, die so ausgestaltet ist, dass sie ein Spannungssignal der Vielzahl der Batteriezellen (108) filtert, wenn der Mikrocontroller (106) die Spannung der Vielzahl der Batteriezellen (108) misst.

12. Das Batteriemanagementsystem nach einem der Ansprüche 1 bis 11, wobei die Verbindungschaltung (104) mindestens einen Temperatursensor (110) umfasst und
wobei die Steuerungsschaltung (102) elektronisch mit dem mindestens einen Temperatursensor (110) verbunden ist und so ausgestaltet ist, dass sie eine Temperatur der Vielzahl der Batteriezellen (108) mittels des mindestens einen Temperatursensors (110) überwacht.

13. Eine Batteriepackung, die eine Vielzahl von Batteriezellen (108) und das Batteriemanagementsystem (100, 200) gemäß einem der Ansprüche 1 bis 12 umfasst.


**Revendications**

1. Système de gestion de batterie (100) comprenant :

un circuit de commande (102), qui est configuré pour surveiller une tension d'une pluralité de cellules de batterie (108) ; et
un circuit de connexion (104), qui est configuré pour connecter électriquement le circuit de commande (102) à la pluralité de cellules de batterie (108) ;
dans lequel le circuit de commande (102) est monté sur un premier support de composants (118) du système de gestion de batterie et comprend

un microcontrôleur (106), qui comprend un ensemble de circuits de surveillance de cellules configuré pour mesurer les tensions de la pluralité de cellules de batterie (108) et pour commander une décharge de la pluralité de cellules de batterie (108) ; et
une première interface électronique ayant des contacts (128) pour connecter électriquement des contacts homologues du circuit de connexion (104) ;

dans lequel le circuit de connexion (104) comprend

une seconde interface électronique ayant des contacts homologues pour connecter électriquement les contacts (128) du circuit de commande ;
des bornes (126) pour venir en contact électrique avec les bornes de la pluralité de cellules de batterie (108) ; et
des résistances d'équilibrage (124), qui sont respectivement connectées électriquement entre les contacts homologues et les bornes (126) ;

dans lequel l'ensemble de circuits de surveillance de cellules comprend des convertisseurs analogique-numérique pour mesurer les tensions de la pluralité de cellules de batterie (108), et des commutateurs d'équilibrage (140) pour décharger la pluralité de cellules de batterie (108), dans lequel chaque convertisseur analogique-numérique est respectivement connecté électriquement entre deux premiers contacts de contrôleur (130) du microcontrôleur (106) et dans lequel chaque commutateur d'équilibrage (140) est respectivement connecté électriquement entre deux seconds contacts de contrôleur (132) du microcontrôleur (106) ; et dans lequel le circuit de commande (102) comprend en outre :

une pluralité de premiers conducteurs (134), qui connectent électriquement respectivement l'un des premiers contacts de contrôleur (130) du microcontrôleur (106) à un contact correspondant des contacts (128) de la première interface électronique, de manière à permettre au microcontrôleur (106) de mesurer respectivement la tension de chaque cellule de batterie (108) entre chaque deux premiers contacts de contrôleur (130) ; et

une pluralité de seconds conducteurs (138), qui connectent électriquement respectivement l'un des seconds contacts de contrôleur (132) du microcontrôleur à un contact correspondant des contacts (128) de la première interface électronique pour connecter électriquement les commutateurs d'équilibrage (140) respectivement à la pluralité de cellules de batterie (108), de manière à permettre au microcontrôleur (106) de commander respectivement la décharge de la pluralité de cellules de batterie (108) à travers les résistances d'équilibrage (124) en commandant l'ouverture et la fermeture des commutateurs d'équilibrage (140) ;

dans lequel un contact des premiers contacts de contrôleur (130) et un contact des seconds contacts de contrôleur (132) sont respectivement connectés électriquement à un même contact (128) de la première interface électronique.

2. Système de gestion de batterie (100) selon la revendication 1, dans lequel le circuit de connexion (104) est monté sur un second support de composants, qui est agencé séparément du premier support de composants.

3. Système de gestion de batterie (100) selon la revendication 2, dans lequel le second support de composants est une carte de circuit imprimé flexible (148).

4. Système de gestion de batterie (100) selon l'une des revendications 2 ou 3, dans lequel les résistances d'équilibrage (124) sont soudées sur le second support de composants

5. Système de gestion de batterie selon l'une des revendications 2 à 4, dans lequel les résistances d'équilibrage (124) sont formées de pistes métalliques fournies sur le second support de composants.

6. Système de gestion de batterie (100) selon l'une des revendications 1 à 5, dans lequel le premier support de composants (118) est une carte de circuit imprimé, en particulier une carte de circuit imprimé en papier.

7. Système de gestion de batterie (100) selon l'une des revendications 1 à 6, dans lequel le premier support de composants (118) est au moins partiellement surmoulé.

8. Système de gestion de batterie (100) selon l'une des revendications 1 à 7, dans lequel la seconde interface électronique est une prise (120) et la première interface électronique est une barrette à broches (144) ; ou dans lequel la seconde interface électronique est un connecteur d'interconnexion de composants périphériques, PCI, soit Peripheral Component Interconnect, en particulier un connecteur d'interconnexion de composants périphériques Express, PCIE, soit Peripheral Component Interconnect Express, ou un connecteur miniPCIE (246), et le premier support de composants (118) est adapté pour s'ajuster dans le connecteur PCI et la première interface électronique est formée sur le premier support de composants (118), de manière à pouvoir entrer en contact avec le connecteur PCI.

9. Système de gestion de batterie (100) selon l'une des revendications 1 à 7, dans lequel la première interface électronique est soudée à la seconde interface électronique.

10. Système de gestion de batterie (200) selon l'une des revendications 1 à 9,

dans lequel la pluralité de seconds conducteurs (138) possèdent respectivement une résistance de test prédéfinie (150), et dans lequel le microcontrôleur (106) est configuré pour mesurer une première tension au niveau du premier contact de contrôleur (130), qui est connecté électriquement en série avec une cellule de batterie à équilibrer, et une seconde tension au niveau des seconds contacts de contrôleur (132), qui sont connectés électriquement en série avec une cellule de batterie à équilibrer, lors de la décharge de la cellule de batterie (108) à équilibrer, et pour déterminer un courant d'équilibrage circulant à travers la résistance d'équilibrage (124) sur la base de la résistance de la résistance de test (150) et de la différence entre la première tension mesurée et la seconde tension mesurée.

11. Système de gestion de batterie (100, 200) selon l'une des revendications 1 à 10, dans lequel le circuit de commande (102) comprend en outre

   une unité de communication (127), qui est configurée pour transmettre des signaux électroniques entre le circuit de commande (102) et un système externe (116) et/ou
   une unité d'alimentation (125), qui est configurée pour alimenter le microcontrôleur (106) et/ou
   dans lequel la pluralité de premiers conducteurs comprennent respectivement un circuit de filtrage (112), qui est configuré pour filtrer un signal de tension de la pluralité de cellules de batterie (108), lorsque le microcontrôleur (106) mesure la tension de la pluralité de cellules de batterie (108).

12. Système de gestion de batterie selon l'une des revendications 1 à 11, dans lequel le circuit de connexion (104) comprend au moins un capteur de température (110) et
   dans lequel le circuit de commande (102) est connecté électriquement à l'au moins un capteur de température (110) et configuré pour surveiller la température de la pluralité de cellules de batterie (108) au moyen de l'au moins un capteur de température (110).

13. Bloc-batterie comprenant une pluralité de cellules de batterie (108) et le système de gestion de batterie (100, 200) selon l'une des revendications 1 à 12.

**Fig. 1**

Fig. 2

**Fig. 3**

**Fig. 4**

**Fig. 5**

**Fig. 6**

**Fig. 7**

Fig. 8

EP 4 210 196 B1

**Fig. 9**

**Fig. 10**

**REFERENCES CITED IN THE DESCRIPTION**

**Patent documents cited in the description**

- WO 2018065853 A1